# EUROPÄISCHE PATENTSCHRIFT

(11) **EP 2 106 938 B1**
(45) Veröffentlichungstag und Bekanntmachung des Hinweises auf die Patenterteilung: **15.06.2011**
(21) Anmeldenummer: 08290321.2
(22) Anmeldetag: 03.04.2008
(51) Int. Cl.: B60H 1/00

(54) **Luftklappe für eine Lüftungs-, Heizungs-, oder Klimaanlage eines Fahrzeugs**
Vent flap for a ventilation, heating and air conditioning system of a vehicle
Volet d'aération pour une installation d'aération, de chauffage ou de climatisation d'un véhicule

(43) Veröffentlichungstag der Anmeldung: 07.10.2009
(73) Patentinhaber: Behr France Rouffach SAS, 68250 Rouffach (FR)
(72) Erfinder: Fuchs, Philippe, 68110 Illzach (FR); Fuentes, Nicolas, 68124 Logelbach (FR); Boillon, Christophe, 67200 Strasbourg (FR)
(74) Vertreter: Grauel, Andreas

(56) Entgegenhaltungen:
- DE-A1- 19 814 953
- DE-A1-102006 012 604
- DE-B4- 19 855 360
- JP-A- 60 135 317
- US-A1- 2007 123 159
- US-B1- 6 386 966

## Beschreibung

Die Erfindung betrifft eine Luftklappe für eine Lüftungs-, Heizungs- oder Klimaanlage eines Fahrzeugs gemäß dem Oberbegriff des Anspruches 1.

Aus der DE 198 14 953 A1 ist eine Luftklappe für eine Lüftungs-, Heizungs- oder Klimaanlage eines Kraftfahrzeugs bekannt, mit einer Trägerstruktur aus formstabilem Material, auf die ein der Luftklappe die Form gebendes, schaumartiges Materials aufgeformt ist. Um eine verbesserte Luftklappe bereitzustellen, die insbesondere ein geringes Gewicht hat und dennoch eine ausreichende Festigkeit und Formstabilität aufweist, besteht die Trägerstruktur aus über Stege miteinander verbundenen Rippen und ist von dem schaumartigen Material vollständig umspritzt. Hierbei verläuft die größte Breitenausdehnung der einzelnen Rippen und Stege senkrecht zu einer Längserstreckung der Luftklappe.

Die DE 198 55 360 B4 offenbart eine Luftklappe für einen Luftführungskanal einer Heizungs- oder Klimaanlage eines Kraftfahrzeugs mit einem Klappenkörper, der zwei über ein Filmscharnier miteinander verbundene Klappenteile aufweist, die um eine Scharnierachse des Filmscharniers zusammenklappbar und mittels Fixierelementen in dieser zusammengeklappten Position fixierbar sind. Die Klappenteile sind hierbei gerüstartig ausgebildet und weisen Durchbrüche auf, die durch eine zwischen den Klappenteilen gehaltene Einlage abdeckbar sind. Die Einlage kann aus einem Schaumstoff, Faserstoff oder Papierstoff oder aus Naturfasern, wie Flachsfasem, Sisalfasern oder Kokosfasern, bestehen, so dass diese Klappe ein sehr geringes Gewicht aufweist. Auf Grund der Einlage hat die Klappe eine Schall dämpfende und dämmende Wirkung. Die Klappenteile und Einlage sind zur Entsorgung voneinander trennbar.

US 2007/123159 offenbart eine lufthlappe nach dem Oberbegriff des Anspruchs 1.

Es ist Aufgabe der Erfindung, eine verbesserte Luftklappe zur Verfügung zu stellen.

Diese Aufgabe wird gelöst durch eine Luftklappe mit den Merkmalen des Anspruchs 1. Vorteilhafte Ausgestaltungen sind Gegenstand der Unteransprüche.

Die Erfindung betrifft eine Luftklappe, aufweisend mindestens ein tragendes Teil sowie schallabsorbierendes oder schalldämpfendes Material, wobei ein erstes Teil mit einer durchgehend geschlossenen Fläche und ein zweites Teil vorgesehen sind, wobei an einer Seite des zweiten Teils ein drittes Teil aus schallabsorbierendem und/oder schalldämpfendem Material angeordnet ist. Beim ersten und zweiten Teil handelt es sich bevorzugt um Kunststoffspritzgussteile. Als schallabsorbierendes oder schalldämpfendes Material sind beispielsweise Schaumstoff, Faserstoff oder Papierstoff oder aus Naturfasern, wie Flachsfasern, Sisalfasern oder Kokosfasern, geeignet. Das erste Teil, welches eine durchgehende, geschlossene Fläche aufweist, übernimmt die Luftabsperrfunktion. Das zweite Teil übernimmt gemeinsam mit dem ersten Teil die tragende Funktion. Durch die Ausgestaltung des zweiten Teils als gitterförmige Struktur kann Gewicht und Material eingespart werden. Ferner kann das erste Teil dünner ausgebildet sein. Das am zweiten Teil angeordnete dritte Teil übernimmt die Funktion der Schalldämpfung bzw absorption.

Das dritte Teil ist zwischen dem ersten Teil und dem zweiten Teil eingelegt. Dabei sind das erste und zweite Teil, insbesondere bevorzugt lösbar, miteinander verbunden und halten dadurch das dritte Teil fest. Dies ermöglicht ein einfaches Recyceln der verschiedenen Materialien, so dass sich die Entsorgung vereinfacht und kostengünstiger wird.

Vorzugsweise ist die durchgehend geschlossene Fläche von einer Rippenstruktur zumindest im zentralen Bereich gestützt. Das Vorsehen von Rippen am ersten Teil spart Gewicht und Material ein, so dass sich das Gesamtgewicht der Luftklappe verringert. Ferner erhöhen die Rippen die Stabilität des ersten Teils.

Das erste Teil ist bevorzugt gekrümmt ausgebildet. Besonders bevorzugt entspricht hierbei die Außenfläche einem Abschnitt einer Kugel oder eines anderen Drehkörpers mit gekrümmter Fläche.

Insbesondere bevorzugt sind am ersten und/oder am zweiten Teil domartige Vorsprünge vorgesehen sind, welche das dritte Teil durchdringen und am jeweils anderen Teil anliegen.

Das zweite Teil weist bevorzugt einen umlaufenden, sich in radialer und/oder axialer Richtung erstreckenden Rand auf, welcher das dritte Teil verdeckt. Hierbei können die beiden Teile fest aneinander angepresst sein. Der Rand übernimmt zudem eine stützende Funktion.

Das zweite Teil weist bevorzugt mehrere Stege auf, welche sich kreuzen, wobei an mindestens einer Stegkreuzung eine Verbindungsstelle zwischen dem ersten Teil und dem zweiten Teil vorgesehen ist. Durch das Vorsehen einer gitterförmigen Struktur lässt sich Material und somit Gewicht einsparen.

Bevorzugt weist das zweite Teil einen gekrümmten Randbereich und einen ebenen zentralen Bereich auf, wobei Stege vorgesehen sind, die sich sowohl durch den gekrümmten als auch den ebenen Bereich erstrecken.

Insbesondere bevorzugt weist das dritte Teil eine im Wesentlichen konstante Dicke auf. Hierbei handelt es sich bevorzugt um ein weiches, schaumartiges Material in Gestalt einer dickeren Folie, welches bedarfsgerecht in seiner Gestalt an die Form des zweiten Teils angepasst werden kann. Alternativ kann auch ein Schaummaterial ausreichender Eigenstabilität verwendet werden, welches eine entsprechende, an das zweite Teil angepasste Gestalt aufweist.

Die Luftklappe weist vorzugsweise eine gekrümmte Außenfläche und eine zumindest im zentralen Bereich ebene Innenfläche auf, wobei die Außenfläche durch das erste Teil und die Innenfläche durch das zweite und dritte Teil gebildet ist. Natürlich ist hierbei auch die umgekehrte Anordnung möglich, sprich die Außenfläche wird durch die gitterförmige Struktur in Verbindung mit dem schallabsorbierenden und/oder schalldämpfenden Material und die Innenfläche durch die durchgehend geschlossene Fläche gebildet.

Die Anbringung des schallabsorbierenden und/oder schalldämpfenden Materials kann durch ein reines Einklemmen zwischen das erste und zweite Teil erfolgen, wobei die Verbindung von erstem und zweitem Teil mittels Schrauben erfolgen kann. Ebenso sind Clipsverbindungen, Klebeverbindungen, oder beliebige andere Verbindungen möglich. Zudem kann das schallabsorbierende und/oder schalldämpfende Material an einem oder beiden anderen Teilen angeklebt oder auf sonstige Weise befestigt sein.

Im Folgenden wird die Erfindung anhand mehrerer Ausführungsbeispiele, teilweise unter Bezugnahme auf die Zeichnung, im Einzelnen erläutert. Es zeigen:
- Fig. 1: eine perspektivische Ansicht einer Luftklappe gemäß dem ersten Ausführungsbeispiel ohne Darstellung des Schaummaterials,
- Fig. 2: eine perspektivische Ansicht eines ersten Teils der Luf- tklappe von Fig. 1,
- Fig. 3: eine perspektivische Ansicht eines zweiten Teils der Luft- klappe von Fig. 1,
- Fig. 4: eine andere perspektivische Ansicht des zweiten Teils von Fig. 43
- Fig. 5: eine Draufsicht auf das zweite Teil der Luftklappe von Fig. 1,
- Fig. 6: eine schematische Darstellung einer quer geschnittenen Luftklappe gemäß einem zweiten Ausführungsbeispiel,
- Fig. 7: einen Schnitt quer durch eine Luftklappe gemäß einem dritten Ausführungsbeispiel,
- Fig. 8: eine perspektivische Ansicht einer Luftklappe gemäß ei- nem vierten Ausführungsbeispiel, und
- Fig. 9: einen schematischen Schnitt durch die Luftklappe von Fig. 8.

Eine Luftklappe 1 dient als Einlassklappe zur Regelung des Lufteintritts in das Luftkanalsystem einer Heizungs- oder Klimaanlage eines Fahrzeugs. Die Luftklappe 1 ist in einem Luftkanal um eine Schwenkachse S verschwenkbar angeordnet.

Die Luftklappe 1 ist mehrteilig ausgebildet, wobei ein erstes Teil 2 mit kugelförmig gekrümmter Fläche und ein auf der Krümmungsinnenseite des ersten Teils 2 angeordnetes, gitterförmiges zweites Teil 3 sowie ein durch ein Schaummaterial gebildetes drittes Teil (nicht dargestellt), das zwischen dem ersten und zweiten Teil angeordnet und in seinen Abmessungen an die Gestalt des Zwischenraums zwischen dem ersten und zweiten Teil angepasst ist, vorgesehen sind. Das erste und das zweite Teil 2, 3 sind mittels zweier Befestigungselemente, vorliegend mittels Schrauben (nicht dargestellt), miteinander lösbar verbunden. Um einen definierten Abstand zwischen den beiden Teilen 2 und 3 sicherzustellen, sind sowohl am ersten Teil 2 innenseitig als auch am zweiten Teil 3 auf der Seite des ersten Teils 2 domartige Vorsprünge 2' bzw. 3' mit Öffnungen ausgebildet, in welche die Schrauben eingeschraubt werden.

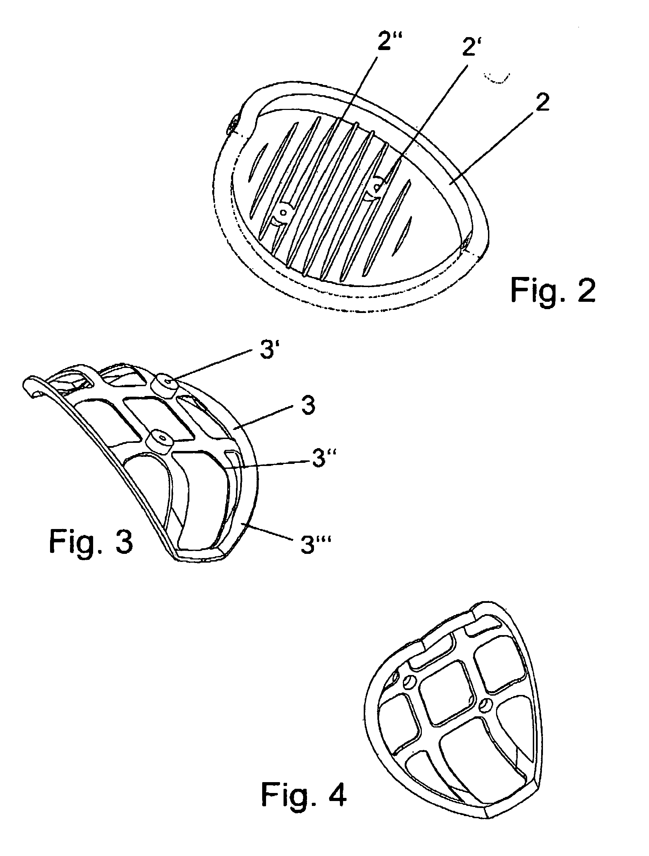

Das erste Teil 2 weist neben den beiden domartigen Vorsprüngen 2' eine Mehrzahl sich parallel zueinander erstreckender, versteifende Rippen 2" auf der Innenseite auf (siehe Fig. 3). Die domartigen Vorsprünge 2' sind vorliegend derart angeordnet, dass sich zwischen zwei Rippen 2" positioniert sind und dieselben verbinden. Rippen 2" und domartige Vorsprünge 2' enden in einer Ebene, welche ebenfalls innerhalb der Krümmung angeordnet ist. Die Rippen 2" liegen in Folge der domartigen Vorsprünge 3' des zweiten Teils 3 nicht am zweiten Teil 3 an. Das erste Teil 2 weist sich in radialer und axialer Richtung nach außen erstreckende Ränder 2"' auf, welche der Abdichtung der Luftklappe 1 in den entsprechenden Endstellungen dient.

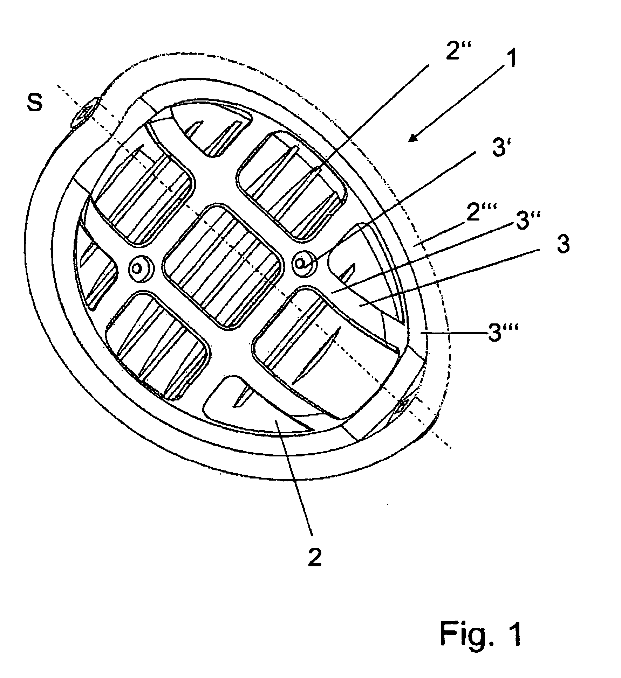

Das zweite, gitterförmige Teil 3 weist vorliegend jeweils zwei parallel zueinander verlaufende Stege 3" auf, welche sich senkrecht an Stegkreuzungen kreuzen (siehe Fig. 1), wobei alle Stege 3" an einem umlaufenden Rand 3"' enden, der sich in radialer und axialer Richtung nach außen erstreckt. Dabei haben die Ränder 3'" vorliegend eine Breite, die etwa der Länge der domartigen Vorsprünge 3' entspricht. Die Ränder 3" dienen der Abdeckung des Schaummaterials und liegen im zusammengebauten Zustand an der Innenfläche des ersten Teils 2 an. Die Stegbreite entspricht ebenfalls etwa der Breite der Ränder 3", jedoch ist die Stegdicke deutlich kleiner.

Das zweite Teil 3 weist im Randbereich eine Krümmung der Stege 3" auf, welche etwa der Krümmung der Innenfläche des ersten Teils 2 entspricht. Im zentralen Bereich ist das zweite Teil 2 im Wesentlichen eben ausgebildet, wobei von der im Wesentlichen ebenen Bodenfläche die beiden domartigen Vorsprünge 3' vorstehen. Auf der Gegenseite der domartigen Vorsprünge 3' ist eine Vertiefung in den entsprechenden Stegkreuzungen ausgebildet, welche der versenkten Anordnung der Schraubenköpfe dient.

Die Ränder 2"', 3" sowohl des ersten als auch des zweiten Teils 2, 3 können aus einem weicheren, elastischen Material als der Rest des entsprechenden Teils bestehen, um eine bessere Anlage an die jeweilige Anlagefläche, also das erste Teil bzw. eine Anschlagfläche im Luftkanal, und damit eine verbesserte Dichtwirkung vorzusehen.

Die Montage der Luftklappe 1 erfolgt wie folgt: auf die Außenseite des zweiten Teils 3 wird das dritte Teil (Schaummaterial), welches eine entsprechende Gestalt aufweist, aufgesetzt, wobei die domartigen Vorsprünge 3' der Positionierung dienen. Auf Grund des Formschlusses, ggf. auch auf Grund eines gewissen Untermaßes in Bezug auf den Öffnungsdurchmesser für die domartigen Vorsprünge 3', wird das dritte Teil am zweiten Teil 3 gehalten. Anschließend werden das zweite und dritte Teil in das erste Teil eingesetzt und mittels zweier Schrauben hiermit verschraubt. Durch einen derartigen Zusammenbau ohne Klebstoff lässt sich auch eine einfache Demontage und Materialtrennung realisieren.

Die Luftklappe 1 verhindert ein Einströmen von Luft in den Fahrzeuginnenraum über einen Luftkanal (nicht dargestellt) ohne durch die Klimaanlage zu strömen. Ferner verhindert die Luftklappe 1, dass Schall, bspw. erzeugt durch den Kältemittelkompressor, welcher in das Klimaanlagengehäuse gelangt, über den Luftkanal ungedämpft in den Fahrzeuginnenraum gelangt. Die Luftklappe 1 dient daher als Schalldämpfer.

Gemäß einer nicht in der Zeichnung dargestellten Variante ist an Stelle einer Schraubverbindung der Teile eine Clipsverbindung vorgesehen. Hierfür sind an Stelle der domartigen Vorsprünge des zweiten Teils Federarme mit hakenförmig ausgebildeten Enden und an Stelle der domartigen Vorsprünge des ersten Teils Öffnungen in den Rippen vorgesehen, in welche die hakenförmig ausgebildeten Enden der Federarme eingreifen. Hierbei ist im Unterschied zum ersten Ausführungsbeispiel an jeder der Stegkreuzungen ein Federarm ausgebildet.

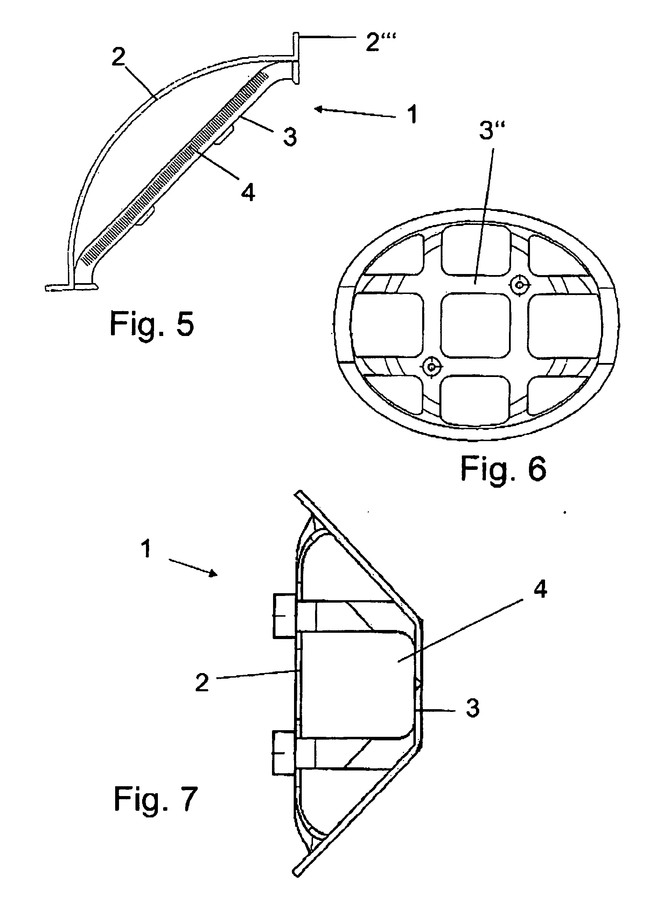

Fig. 5 zeigt eine schematische Darstellung eines Schnitts durch eine Luftklappe 1 gemäß dem zweiten Ausführungsbeispiel. Hierbei ist das erste Teil 2 kugelförmig gekrümmt ausgebildet, mit zwei als Anschläge dienenden, nach außen vorstehenden Rändern2"'. Im Inneren ist das zweite Teil 3 mittels Schrauben fixiert, von denen die Enden der Köpfe leicht überstehen. Auf der zum ersten Teil 2 weisenden Seite des zweiten Teils 3 ist das Schaummaterial, welches das dritte Teil 4 bildet, angeordnet. Dieses Schaummaterial wird im Rahmen der Montage am zweiten Teil 3 mit Hilfe der domartigen Vorsprünge (nicht dargestellt) des zweiten Teils 3 an demselben positioniert und gehalten und anschließend werden das zweite Teil samt Schaummaterial am ersten Teil 2 mittels der Schrauben lösbar fixiert. Die Funktion der Luftklappe 1 des zweiten Ausführungsbeispiels entspricht derjenigen des ersten Ausführungsbeispiels, so dass hierauf nicht näher eingegangen wird.

Fig. 6 und 7 zeigen ein drittes Ausführungsbeispiel einer Luftklappe 1, wobei sich die Darstellungen der Figuren 6 und 7 dadurch unterscheiden, dass die verbindenden Schrauben (nicht dargestellt) gemäß Fig. 7 auf einer Seite angeordnet sind und nicht, wie beim ersten Ausführungsbeispiel oder Fig. 6, diagonal einander gegenüberliegend. Dies ermöglicht bei einer asymmetrischen Ausgestaltung der Luftklappe eine definierte Ausrichtung des zweiten Teils 3 im ersten Teil 2 und verhindert Montagefehler.

Ferner ist das erste Teil 2 mit einem sich in radialer Richtung nach außen erstreckenden, die Außenfläche fortsetzenden Rand ausgebildet. Das erste Teil weist drei in einem Winkel (vorliegend jeweils 45°) zueinander angeordnete ebene Bereiche auf. Im Bereich der Knicke sind jeweils die domartigen Vorsprünge angeordnet, welche sich auf der Innenseite erstrecken. Das zweite Teil ist gitterartig und in den Endbereichen etwas verstärkt ausgebildet, wobei es zwei Öffnungen für Schrauben aufweist. Die Schraubenköpfe halten das zweite Teil am ersten Teil fest. Der Zwischenraum zwischen erstem und zweitem Teil ist mit dem schallabsorbierendes und schalldämpfenden Material, vorliegend Schaumstoff, des dritten Teils 4 vollständig gefüllt.

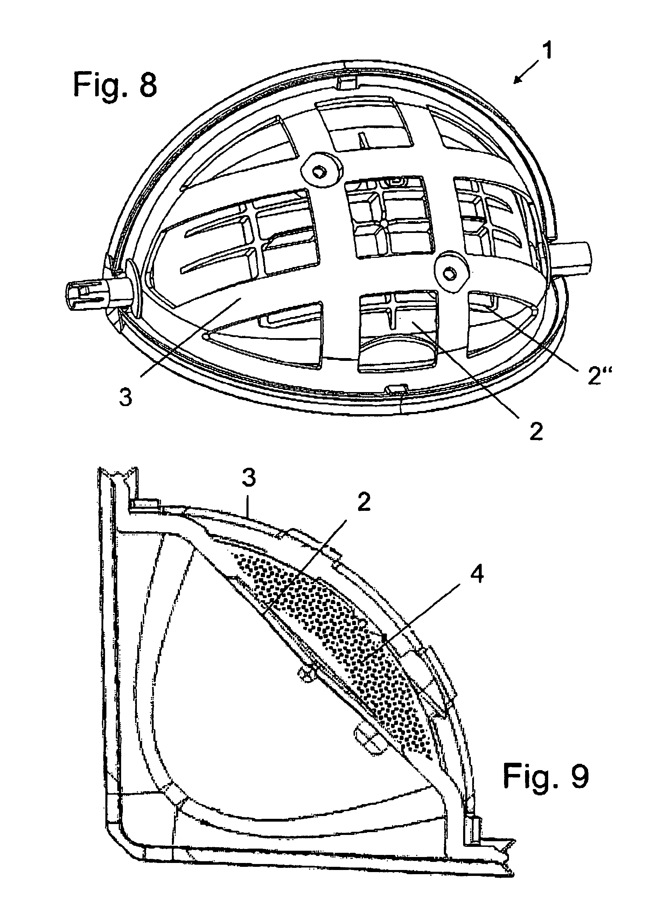

Die Figuren 8 und 9 zeigen ein viertes Ausführungsbeispiel einer mehrteiligen Luftklappe 1, welche - sofern nachfolgend nicht ausdrücklich erwähnt - eine im Wesentlichen der Luftklappe des zuvor beschriebenen ersten Ausführungsbeispiels entsprechende Gestalt hat. Hierbei ist jedoch im Unterschied zum ersten Ausführungsbeispiel das erste Teil 2, welches eine durchgehende, geschlossene Fläche aufweist, an der Stelle angeordnet, an welcher gemäß dem ersten Ausführungsbeispiel das zweite Teil mit gitterartiger Gestalt angeordnet ist. Entsprechend ist das zweite Teil 3 gemäß dem vierten Ausführungsbeispiel an der Stelle angeordnet, an welcher gemäß dem ersten Ausführungsbeispiel das erste Teil mit durchgehender Fläche angeordnet ist. Somit wird die sphärisch gekrümmte Außenfläche der Luftklappe 1 durch das gitterartige zweite Teil 3 gebildet. Auch der Aufbau des Gitters mit jeweils zwei parallel zueinander verlaufenden Stegen, die in rechten Winkeln zu dem zweiten Stegepaar angeordnet sind, entspricht im Prinzip dem des ersten Ausführungsbeispiels. Von der geschlossenen Fläche des ersten Teils 2 aus erstreckt sich eine Mehrzahl von sich rechtwinklig kreuzend angeordneten Rippen 2", die senkrecht von der im Wesentlichen eben ausgebildeten Fläche in Richtung des zweiten Teils 3 abstehen. Ferner sind Schraubdome vorgesehen, welche ein Verschrauben der beiden Teile 2 und 3 ermöglichen. Zwischen den beiden Teilen 2 und 3 ist - entsprechend dem ersten Ausführungsbeispiel - ein drittes Teil 4 in Gestalt eines Schaummaterials angeordnet.

### Bezugszeichen liste

- 1: Luftklappe
- 2: erstes Teil
- 2': domartiger Vorsprung
- 2": Rippe
- 2"': Rand
- 3: zweites Teil
- 3': domartiger Vorsprung
- 3": Steg
- 3"': Rand
- 4: drittes Teil (Schaummaterial)

## Patentansprüche

1. Luftklappe, aufweisend mindestens ein tragendes Teil (3) sowie schallabsorbierendes oder schalldämpfendes Material, ein erstes Teil (2) mit einer durchgehend geschlossenen Fläche und ein zweites Teil (3) in Gestalt einer gitterförmigen Struktur vorgesehen sind, wobei an einer Seite des zweiten Teils (3) ein drittes Teil (4) aus schallabsorbierendem und/oder schalldämpfendem Material angeordnet ist,
**dadurch gekennzeichnet, dass** das dritte Teil (4) zwischen dem ersten Teil (2) und dem zweiten Teil (3) eingelegt ist.

2. Luftklappe nach Anspruch 1, **dadurch gekennzeichnet, dass** die durchgehend geschlossene Fläche von einer Rippenstruktur zumindest im zentralen Bereich gestützt ist.

3. Luftklappe nach einem der vorhergehenden Ansprüche, **dadurch gekennzeichnet, dass** das erste Teil (2) gekrümmt ausgebildet ist.

4. Luftklappe nach einem der vorhergehenden Ansprüche, **dadurch gekennzeichnet, dass** am ersten und/oder am zweiten Teil (2 bzw. 3) domartige Vorsprünge (2', 3') vorgesehen sind, welche das dritte Teil (4) durchdringen und am jeweils anderen Teil (3 bzw. 2) anliegen.

5. Luftklappe nach einem der vorhergehenden Ansprüche, **dadurch gekennzeichnet, dass** das zweite Teil (3) einen umlaufenden, sich in radialer und/oder axialer Richtung erstreckenden Rand (3"') aufweist, welcher das dritte Teil (4) verdeckt.

6. Luftklappe nach einem der vorhergehenden Ansprüche, **dadurch gekennzeichnet, dass** das zweite Teil (3) mehrere Stege (3") aufweist, welche sich kreuzen, wobei an mindestens einer Stegkreuzung eine Verbindungsstelle zwischen dem ersten Teil (2) und dem zweiten Teil (3) vorgesehen ist.

7. Luftklappe nach einem der vorhergehenden Ansprüche, **dadurch gekennzeichnet, dass** das zweite Teil (3) einen gekrümmten Randbereich und einen ebenen zentralen Bereich aufweist, wobei Stege (3") vorgesehen sind, die sich sowohl durch den gekrümmten als auch den ebenen Bereich erstrecken.

8. Luftklappe nach einem der vorhergehenden Ansprüche, **dadurch gekennzeichnet, dass** das dritte Teil (4) eine im Wesentlichen konstante Dicke aufweist.

9. Luftklappe nach einem der vorhergehenden Ansprüche, **dadurch gekennzeichnet, dass** die Luftklappe (1) eine gekrümmte Außenfläche und eine zumindest im zentralen Bereich ebene Innenfläche aufweist, wobei die Außenfläche durch das erste Teil (2) und die Innenfläche durch das zweite und dritte Teil (3, 4) gebildet ist.

10. Luftklappe nach einem Ansprüche 1 bis 8, **dadurch gekennzeichnet, dass** die Luftklappe (1) eine gekrümmte Außenfläche und eine zumindest im zentralen Bereich ebene Innenfläche aufweist, wobei die Außenfläche durch das zweite Teil (3) mit gitterförmiger Struktur in Verbindung mit dem dritte Teil (4) und die Innenfläche durch das erste Teil (2) gebildet ist.

## Claims

1. A vent flap, comprising at least one supporting part (3) as well as sound-absorbing or sound-damping material, one first part (2) having a continuously closed surface and one second part (3) in the form of a grid-shaped structure, wherein on one side of the second part (3), a third part (4) made from sound-absorbing and/or sound-damping material is arranged, **characterized in that** the third part (4) is inserted between the first part (2) and the second part (3).

2. The air flap according to claim 1, **characterized in that** the continuously closed surface is supported by a rib structure at least in the central region.

3. The air flap according to any one of the preceding claims, **characterized in that** the first part (2) is formed in a curved manner.

4. The air flap according to any one of the preceding claims, **characterized in that** on the first and/or second part (2 and 3, respectively), dome-like projections (2', 3') are provided which penetrate the third part (4) and abut against the respective other part (3 and 2, respectively).

5. The air flap according to any one of the preceding claims, **characterized in that** the second part (3) has a circumferential edge (3''') which extends in the radial and/or axial direction and which covers the third part (4).

6. The air flap according to any one of the preceding claims, **characterized in that** the second part (3) has a plurality of webs (3") which intersect, wherein on at least one web intersection, a connection point between the first part (2) and the second part (3) is provided.

7. The air flap according to any one of the preceding claims, **characterized in that** the second part (3) has a curved edge region and a second planar central region, wherein webs (3'') are provided which extend through the curved as well as the planar region.

8. The air flap according to any one of the preceding claims, **characterized in that** the third part (4) has a substantially constant thickness.

9. The air flap according to any one of the preceding claims, **characterized in that** the air flap (1) has a curved outer surface and an inner surface which is planar at least in the central region, wherein the outer surface is formed by the first part (2) and the inner surface is formed by the second and the third part (3, 4).

10. The air flap according to any one of the claims 1 to 8, **characterized in that** the air flap (1) has a curved outer surface and an inner surface which is planar at least in the central region, wherein the outer surface is formed by the second part (3) having a grid-shaped structure in connection with the third part (4), and the inner surface is formed by the first part (2).

## Revendications

1. Volet d'air présentant au moins une pièce support (3) ainsi qu'une matière absorbant les bruits ou amortissant les bruits, ou il est prévu une première pièce (2) comportant une surface fermée de façon continue et une deuxième pièce (3) se présentant comme une structure en forme de grille, une troisième pièce (4) se composant d'une matière absorbant les bruits et / ou amortissant les bruits étant disposée sur un côté de la deuxième pièce (3),
**caractérisé en ce que** la troisième pièce (4) est insérée entre la première pièce (2) et la deuxième pièce (3).

2. Volet d'air selon la revendication 1, **caractérisé en ce que** la surface fermée de façon continue est supportée, au moins dans la zone centrale, par une structure nervurée.

3. Volet d'air selon l'une ou l'autre des revendications précédentes, **caractérisé en ce que** la première pièce (2) est configurée de façon courbe.

4. Volet d'air selon l'une quelconque des revendications précédentes, **caractérisé en ce que** des parties saillantes (2', 3') en forme de dôme sont prévues sur la première et / ou sur la la deuxième pièce (2 ou 3), parties saillantes qui pénètrent dans la troisième pièce (4) et sont en appui respectivement sur l'autre pièce (3 ou 2).

5. Volet d'air selon l'une quelconque des revendications précédentes, **caractérisé en ce que** la deuxième pièce (3) présente une bordure (3''') circulaire s'étendant dans le sens radial et / ou axial, bordure qui recouvre la troisième partie (4).

6. Volet d'air selon l'une quelconque des revendications précédentes, **caractérisé en ce que** la deuxième pièce (3) présente plusieurs parties pleines (3") qui se croisent, un point de jonction entre la première pièce (2) et la deuxième pièce (3) étant prévu au niveau d'au moins une intersection des parties pleines.

7. Volet d'air selon l'une quelconque des revendications précédentes, **caractérisé en ce que** la deuxième pièce (3) présente une zone de bordure courbe et une zone centrale plane, où il est prévu des parties pleines (3") qui s'étendent aussi bien à travers la zone courbe que la zone plane.

8. Volet d'air selon l'une quelconque des revendications précédentes, **caractérisé en ce que** la troisième pièce (4) présente une épaisseur pratiquement constante.

9. Volet d'air selon l'une quelconque des revendications précédentes, **caractérisé en ce que** le volet d'air (1) présente une surface extérieure courbe et une surface intérieure plane au moins dans la zone centrale, où la surface extérieure est formée par la première pièce (2), la surface intérieure étant formée par la deuxième et la troisième pièces (3, 4).

10. Volet d'air selon l'une quelconque des revendications 1 à 8, **caractérisé en ce que** le volet d'air (1) présente une surface extérieure courbe et une surface intérieure plane au moins dans la zone centrale, où la surface extérieure est formée par la deuxième pièce (3) ayant une structure en forme de grille, en liaison avec la troisième pièce (4), la surface intérieure étant formée par la première pièce (2).
